(19) Europäisches Patentamt
European Patent Office
Office européen des brevets

(11) Veröffentlichungsnummer: **0 049 342**
**B1**

(12) # EUROPÄISCHE PATENTSCHRIFT

(45) Veröffentlichungstag der Patentschrift: **13.06.84**

(21) Anmeldenummer: **81106181.1**

(22) Anmeldetag: **07.08.81**

(51) Int. Cl.³: **C 07 F 9/42**, C 07 F 9/34, C 07 F 9/14, C 07 F 9/12, C 07 F 9/15, C 07 F 9/20, C 07 F 9/53, C 01 B 25/10

(54) **Verfahren zur Oxidation von organischen Phosphorverbindungen.**

(30) Priorität: **10.09.80 DE 3033957**

(43) Veröffentlichungstag der Anmeldung: **14.04.82 Patentblatt 82/15**

(45) Bekanntmachung des Hinweises auf die Patenterteilung: **13.06.84 Patentblatt 84/24**

(84) Benannte Vertragsstaaten: **BE CH DE FR GB IT LI NL**

(56) Entgegenhaltungen:
**EP-A- 0 010 368**
**DE-B- 1 271 089**
**US-A- 1 788 959**
**J.C.S. DALTON TRANSACTIONS, Band 5, 1979, Seiten 883-90 K.B. DILLON et al. "Reactions of some phosphorus (III) halides with storgly acidic solvents"**
**G.M. KOSOLAPOFF and L. MAIER: "Organic phosphorus compounds" Band 3, 1972, J. Wiley & Sons, Ed. New York, US Seiten 348-49**
**G.M. KOSOLAPOFF and L. MAIER: "Organic phosphorus compounds" Band 4, 1972, J. Wiley & Sons, New York, US Seite 165**

(73) Patentinhaber: **HOECHST AKTIENGESELLSCHAFT**
**Postfach 80 03 20**
**D-6230 Frankfurt am Main 80 (DE)**

(72) Erfinder: **Grosse, Jürgen, Dr.**
**Am grünen Weg 5**
**D-5030 Hürth (DE)**

**EP 0 049 342 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zur Oxidation von Phosphorverbindungen der allgemeinen Formel (I)

$$R_{3-n}PX_n \qquad (I)$$

in welcher R entweder für geradlinige und/oder verzweigte Alkyl-, Cycloalkyl-, Aryl-, Alkylaryl- sowie Aralkylgruppen mit 1 bis 18, vorzugsweise 1 bis 8 C-Atomen steht oder eine Gruppe —OR′ oder —SR′ darstellt, in der R′ einen Aryl- oder Alkylrest mit 1 bis 8 C-Atomen bedeutet, oder R eine Gruppe

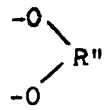

ist, in der R″ die Bedeutung eines Alkylrestes mit 2 bis 8 C-Atomen besitzt, X einem Halogen, insbesondere Chlor, Brom oder Jod, entspricht und n = 0, 1, 2, 3 ist, zu Verbindungen der allgemeinen Formel (II)

$$R_{3-n}P(O)X_n \qquad (II)$$

in der R, X und n die oben genannten Bedeutungen aufweisen.

Es ist bereits bekannt, Verbindungen der allgemeinen Formel I durch Oxidationsmittel, wie z. B. $O_2$, NO, $NO_2SO_2$, $SO_2Cl_2$, $SO_3$, zu oxidieren (vergl. z. B. Houben Weyl, Methoden der organischen Chemie, Band 12/1 und 12/2 und Kosolapoff/Maier, Organic Phosphorus Compounds, Wiley-Interscience, Band 3, Seiten 348-349 und Band 4, Seite 165, 1972).

Diese bekannten Verfahren weisen jedoch eine ganze Reihe von Nachteilen auf. Bei den meisten bislang eingesetzten Oxidationsmitteln handelt es sich um Gase, so daß die Oxidationen als Gas-Flüssigkeitsumsetzungen geführt werden müssen. Zur Erzielung hoher Umsetzungsgeschwindigkeit ist es dabei notwendig, große Gasvolumina in kurzer Zeit durchzusetzen bzw. bei erhöhtem Druck zu arbeiten, was technisch kostspielige und aufwendige Apparate erfordert. Insbesondere für leichter flüchtige Verbindungen der Formel I besteht u. a. Verpuffungsgefahr im Gasraum bei der Durchführung dieser Reaktion, wenn zu viel der Verbindung I in den Gasraum mitgerissen wird, Ferner ist es zur Vermeidung von hohen Ausbeuteverlusten erforderlich, leistungsfähige Abgaskühler zu verwenden, um das Mitreißen von flüchtigen Verbindungen der Formeln I oder II zu verhindern.

Vielfach sind die genannten Oxidationsmittel auch nicht allgemein für die Verbindungen des Typs I einsetzbar, sondern nur für die Oxidation einzelner Vertreter dieser Verbindungsklasse.

So beschreibt die EP-A-0 010 368 ein Verfahren zur Oxidation von Phenyldichlorphosphan bei Atmosphärendruck mit Sauerstoff zur Herstellung von Phenylphosphonsäuredichlorid gemäß

$$2\ C_6H_5PCl_2 + O_2 \xrightarrow{\text{ca. 30-60 °C}} 2\ C_6H_5P(O)Cl_2$$

Führt man die Umsetzung mit $CH_3PCl_2$ durch, so treten erhebliche Ausbeuteverluste durch Austreiben von $CH_3PCl_2$ auf, außerdem sind lange Reaktionszeiten zur vollständigen Umsetzung erforderlich (Houben-Weyl, Bd. 12/1, Seite 398 : 86 % Ausbeute nach 24 h Reaktionszeit). Daneben wurden häufig Verpuffungen bei eigenen Versuchen beobachtet.

Bei der Oxidation von $CH_3PBr_2$ durch $NO_2$ (L. Maier, Helv. Chem. Acta 46, S. 2667 (1963)) wurden erhebliche Ausbeuteminderungen durch P-C-Spaltung beobachtet (Ausbeute 70 % d. Th.).

Die Oxidation mittels $SO_2Cl_2$ gemäß

$$C_6H_5PCl_2 + SO_2Cl_2 \longrightarrow C_6H_5P(O)Cl_2 = SOCl_2$$

bzw. mittels $SO_2/Cl_2$, wie z. B.

$$PCl_3 + SO_2 + Cl_2 \longrightarrow POCl_3 + SOCl_2$$

führt zur Bildung von Thionylchlorid, das destillativ vom gewünschten Endprodukt abzutrennen ist (V.A. Petrov et al., Chem. Abs. 57, S. 5583 h (1962) bzw. US-A-1 788 959). Der Umgang mit $SO_3$ ist technisch schwierig unf aufwendig.

Ein weiteres bekanntes Verfahren zur Oxidation von Verbindungen des Typs I ist die Chlorierung und anschließende Hydrolyse (vergl. Houben Weyl, Methoden der organischen Chemie, Bd. 12/1, S. 390), nach

a) $RPCL_2 \xrightarrow{\text{Chlorierung}} RPCl_4$

b) $RPCL_4 \xrightarrow{H_2O} RPOCl_2 + 2\ HCl$ bzw. $\xrightarrow{SO_2} RPOCl_2 + SOCl_2$

Dieses Verfahren ist umständlich und erfordert mindestens zwei Prozeßschritte.

Die Oxidation mit $SO_2$ führt zu Produktgemischen (E. Fluck, H. Binder, Angew. Chemie 77, S. 381 (1965), DE-B-1 272 089) gemäß

$$3\ C_6H_5PCl_2 + SO_2 \longrightarrow 2\ C_6H_5P(O)Cl_2 + C_6H_5P(S)Cl_2$$

und erfordert extrem lange Reaktionszeiten (42 Tage) bzw. muß unter dem sich bei der jeweiligen Temperatur einstellenden Dampfdruck von flüssigem $SO_2$ durchfeführt werden.

Außerdem ist bekannt, $PCl_3$ in Gegenwart von Kohlenwasserstoffen mit Sauerstoff zu oxidieren (Houben Weyl, Bd. 12/1, S. 399)

$$R{-}H + 2\ PCL_3 + O_2 \longrightarrow RP(O)Cl_2 + POCL_3 + HCl$$

Bei diesem Verfahren werden lediglich Ausbeuten von 18-45 % d. Th. erzielt.

Ferner ist bekannt, Phosphorhalogenide $PY_3$ (Y = Cl, Br, I) mittels eines Überschusses von Schwefelsäurederivaten $HSO_3Z$ (Z = OH, Cl, F) zu hydrolysieren (K. B. Dillon et al., I. C. S. Dalton Transactions *1979,* S 883). Dabei enstehen jedoch nicht Verbindungen der oben angegebenen allgemeinen Formel II, sondern durch Solvolyse Gemische von Phosphoniumsalzen $[PYnZ_{4-n-}]^+$ (n = 0 bis 4), beispielsweise nach folgenden Reaktionsmechanismen :

$$PCl_3 + 2\ HSO_3Cl \longrightarrow [PCl_{4-}]^+ + HSO_4^- + SO_2 + HCl$$

oder

$$PCl_3 + 2\ HSO_3Cl \longrightarrow [PCl_3OH_-]^+ + SO_3Cl^- + SO_2 + HCl$$

Aufgabe der vorliegenden Erfindung war es, die Nachteile der bekannten Arbeitsweisen zu überwinden.

Überraschenderweise wurde nun gefunden, daß sich die Aufgabe in höchst einfacher Weise lösen läßt, wenn man als Oxidationsmittel Chlorsulfonsäure verwendet und die Umsetzung, gegebenenfalls in Gegenwart eines Lösungsmittels, in einer homogenen flüssigen Phase durchführt.

Die Umsetzung erfolgt zweckmäßigerweise bei Temperaturen zwischen −30 und 150 °C. Die Reaktionskomponenten werden im Molverhältnis Chlorsulfonsäure : organischer Phosphorverbindung gemäß Formel I wie 1 : 1 bis 1 : 1,1 eingesetzt. Die durch das erfindungsgemäße Verfahren gewonnenen Produkte der allgemeinen Formel II sind wertvolle Zwischenprodukte zur Herstellung von Pflanzenschutzmitteln, Flammschutzmitteln oder Kunststoffadditiven.

Die Ausgangssubstanzen gemäß Formel I sind bekannte Verbindungen und können nach allgemein bekannten Herstellungsmethoden der Phosphororganochemie hergestellt werden.

Gegenüber dem Stand der Technik bietet das erfindungsgemäße Verfahren eine ganze Reihe von Vorteilen.

Die Umsetzungen verlaufen in jedem Fall in homogener flüssiger Phase, so daß hohe Umsetzungsgeschwindigkeiten zu erzielen sind. Die Ausbeuten der Reaktionen sind in den meisten Fällen quantitativ, die Reaktionsprodukte fallen in hochreiner Form an. In vielen Fällen sind Reinigungsschritte, z. B. Destillation nicht erforderlich. Es genügt oftmals ein kurzes Strippen im Vakuum, um hochreine Produkte mit überraschend geringen Restschwefelgehalten zu erhalten.

Es kann so verfahren werden, daß die zu oxidierenden Komponenten der Formel I vorgelegt und Chlorsulfonsäure zudosiert wird ; es kann aber auch umgekehrt verfahren werden. Unter Umständen ist es von Vorteil, beide Komponenten gleichzeitg in das Reaktionsgefäß zu dosieren, gegebenenfalls unter Vorlage von Endprodukt.

Die Reaktion springt sofort bei Erreichen der notwendigen Temperatur an ; sie verläuft exotherm unter stetiger Gasentwicklung. Zurück bleibt das gewünschte Produkt der allgemeinen Formel II.

Bei flüchtigen Komponenten der Formel I kann es von Vorteil sein, das Oxidationsmittel Chlorsulfonsäure in den Gasabgang zu dosieren, um Ausbeuteverluste, die durch Mitreißen von niedrigsiedenden Ausgangsstoffen entstehen, zu minimieren. Unter Umständen empfiehlt sich die Verwendung einer Waschkolonne im Gasabgang, in der mitausgetriebene Anteile der Komponente I durch reaktiven Kontakt mit dem Oxidationsmittel aus dem HCl und $SO_2$ enthaltenden Abgas ausgewaschen werden. Die Umsetzung kann lösungsmittelfrei gefahren werden, es kann jedoch auch in Gegenwart eines inerten Lösemittels umgesetzt werden.

Das erfindungsgemäße Verfahren wird durch die folgenden Beispiele erläutert :

## Beispiel 1

In einem 1-l-Mehrhalskolben mit Rührer, Innenthermometer, Rückflußkühler und 2 Tropftrichtern werden 331 g Methyldichlorphosphan (2,83 Mol) und 327 g Chlorsulfonsäure (2,82 Mol) unter Kühlung

gleichzeitig zugetropft und umgesetzt. Die Chlorsulfonsäure wird dabei durch den Rückflußkühler zudosiert, durch den das Abgas entweicht. Die Umsetzungstemperatur wird durch Kühlung auf ca. 25-30 °C gehalten. Nach 1 h Zutropfzeit wird 1 h bei Raumtemperatur nachgerührt. Anschließend wird das Rohprodukt bei 32 °C und 0,5 mbar gestrippt.

Es werden 371 g (99 % der Theorie) Methanphosphonsäuredichlorid erhalten mit einem gaschromatographisch bestimmten Gehält von 99,4 %. Das Produkt kristallisiert beim Stehen über Nacht (Fp. 32 °C). Der Restschwefelgehalt beträgt 0,4 %.

Beispiel 2

In einem 1-l-Mehrhalskolben mit Innenthermometer, Tropftrichter, Rührer und Rückflußkühler werden 58,25 g Chlorsulfonsäure (0,5 Mol) vorgelegt. Unter Wasserkühlung werden innerhalb 30 min 58,5 g Methyldichlorphosphan (0,5 Mol) bei einer Innentemperatur von 20 °C unter intensivem Rühren zugetropft. Dann werden weitere 699 g Chlorsulfonsäure (6 Mol) zugegeben und dazu gleichfalls 702 g Methyldichlorphosphan (6 Mol) während 4 h wie oben beschrieben zugetropft. Nach 1 h Nachreaktionszeit wird bis 130 mbar bei 32 °C gestrippt.

Es werden 820 g (95 % der Theorie) Methanphosphonsäuredichlorid erhalten (Gehalt 99,1 % gaschromatographisch bestimmt). Das Produkt kristallisiert beim Stehen über Nacht (Fp. 30 °C).

Beispiel 3

In einem 2-l-Mehrhalskolben mit Rührer, Innenthermometer, Tropftrichter, 15-cm-Raschig-Kolonne mit aufgesetztem Intensivkühler und Tropftrichter sowie Kühlbad werden gleichzeitig 1 228 g Methyldichlorphosphan (10,5 Mol) und 1 165 g Chlorsulfonsäure (10,0 Mol) zugetropft. Die Zugabe der Chlorsulfonsäure erfolgt durch den Rückflußkühler und die 15-cm-Raschig-Kolonne. Per Kühlung wird die Innentemperatur unter 30 °C gehalten. Die Dosierzeit beträgt 3 h. Nach 1 h Nachreaktion wird bei 130 mbar/35 °C 30 min gestrippt. Zurück bleiben 1 324 g (99,6 % der Theorie) Methanphosphonsäuredichlorid (Gehalt 99,4 % gaschromatographisch bestimmt), das allmählich durchkristallisiert (Fp. 31 °C). Der Restschwefelgehalt beträgt 0,03 %.

Beispiel 4

In einem 250-ml-Mehrhalskolben mit Rührer, Innenthermometer, Rückflußkühler und Tropftrichter werden 49,5 g Chlorsulfonsäure (0,42 Mol) und 100 ml Dichlormethan vorgelegt und 41 g Dimethylchlorphosphan (0,42 Mol) während 30 min zugetropft. Die Reaktionstemperatur wird per Kühlung auf 15-20 °C gehalten. Man läßt 2 h bei Raumtemperatur nachrühren. Nun wird bei 130 mbar und 80 °C das Lösemittel abgezogen. Zurück bleiben 45 g (95 % der Theorie) Dimethylphosphinsäurechlorid (Gehalt 97,8 % gaschromatographisch bestimmt).

Beispiel 5

In einer Apparatur analog Beispiel 4 werden 46,4 g Chlorsulfonsäure vorgelegt (0,4 Mol) und mit 54 g Ethyldichlorphosphan (0,41 Mol) bei 20-30 °C umgesetzt. Die Dosierzeit beträgt 80 min. Nach 30 min Nachreaktionszeit wird bis 130 mbar/30 °C gestrippt. Es werden 57 g (97 % der Theorie) Ethanphosphonsäuredichlorid erhalten. Im $^{31}$P-NMR-Spektrum sind keine Verunreinigungen zu erkennen.

Beispiel 6

In einer Beispiel 4 entsprechenden Apparatur werden 35,8 g Phenyldichlorphosphan (0,2 Mol) vorgelegt und unter Kühlung bei 25-30 °C mit 23,4 g Chlorsulfonsäure (0,2 Mol) umgesetzt. Die Dosierzeit beträgt 30 min. Nach 1 Nachreaktion wird bis 33 mbar/35 °C gestrippt. Zurück bleiben 39 g Phenylphosphonsäuredichlorid (0,2 Mol, Gehalt 98,2 % gaschromatographisch bestimmt).

Beispiel 7

In einer Apparatur entsprechend Beispiel 4 werden 116,5 g Chlorsulfonsäure (1 Mol) vorgelegt und auf 50 °C vorgewärmt. 137,5 g Phosphortrichlorid werden während 1,5 h Dosierzeit zugetropft, wobei die Reaktionstemperatur nach dem Anspringen der Reaktion bei ca. 50 °C durch Kühlung auf ca. 30 °C gehalten wird. Es wird dann refluxiert und 30 min bis 74 °C Kopftemperatur andestilliert. Es werden 130 g Rohphosphoroxidchlorid erhalten (Gehalt 85 % gaschromatographisch bestimmt).

Beispiel 8

In einer Apparatur wie in Beispiel 4 beschrieben werden 0,2 Mol Phosphortribromid vorgelegt und bei einer Reaktionstemperatur von 45-47 °C mit 0,2 Mol Chlorsulfonsäure umgesetzt. Nach 30 min Dosierzeit

und 30 min Nachreaktion beginnt das Produkt bei ca. 35 °C zu kristallisieren. Es wird bis 130 mbar/35 °C gestrippt. Zurück bleiben 50 g Rohphosphoroxidbromid (Fp. 48 °C), das laut $^{31}P$-NMR-Spektrum 75 % P als $P(O)Br_3$ enthält.

Beispiel 9

In der oben beschriebenen Apparatur werden 80 g S-Propylthiophosphorigsäureesterdichlorid (0,45 Mol) vorgelegt und unter Kühlung bei 18-20 °C mit 52,6 g (0,45 Mol) Chlorsulfonsäure umgesetzt. Die Dosierzeit beträgt 30 min. Nach 30 min Nachreaktion wird bis 100 mbar/30 °C gestrippt. Zurück bleiben 86 g eines Rohproduktes, das laut $^{31}P$-NMR-Spektrum 73 % P als S-Propylthiophosphorsäureesterdichlorid enthält.

Beispiel 10

23,3 g Chlorsulfonsäure (0,2 Mol) werden in einer Apparatur entsprechend Beispiel 4 vorgelegt und unter Kühlung werden 62 g (0,2 Mol) Triphenylphosphit während 1 h zugetropft. Nach ca. 20 min Reaktionszeit wird das Reaktionsgemisch viskos, so daß ca. 20 ml Dichlormethan als Lösemittel zugesetzt werden. Die Reaktionstemperatur wird auf 25-30 °C gehalten. Nach 1 h Nachreaktion wird bis 100 mbar/35 °C gestrippt. Es werden 70 g eines Rohproduktes gewonnen, das laut $^{31}P$-NMR-Spektrum 65 % P als Triphenylphosphat enthält.

Beispiel 11

In einer Apparatur entsprechend Beispiel 4 werden 116,5 g Chlorsulfonsäure (1 Mol) vorgelegt und unter Eiskühlung bei 18-20 °C innerhalb 60 min mit 208 g (1 Mol) Tributylphosphan umgesetzt. Gegen Ende der Zugabe steigt nach Wegnahme der Kühlung die Umsetzungstemperatur auf 34 °C. Beim Strippen (0,5 mbar/70 °C) setzt eine heftige exotherme Reaktion ein ; die Temperatur steigt bis auf 140 °C. Es wird dann nochmals bei 1 mbar/80 °C gestrippt ; danach bleiben 263 g Tributylphosphanoxid als HCl-Addukt zurück, das durch Elementaranalyse und $^{31}P$-NMR-Spektrum nachgewiesen wird : 90 % P liegen als Tributylphosphanoxid-HCl-Addukt vor.

Beispiel 12

In der Standardapparatur (Beispiel 4) werden 23,3 g Chlorsulfonsäure (0,2 Mol) in 40 ml Dichlormethan vorgelegt und dann unter Rühren 72 g Tri-n-octylphosphan (0,2 Mol) während 45 min zugetropft. Die Temperatur wird mit schwacher Kühlung unter 30 °C gehalten. Nach 1 h Nachreaktionszeit wird bis 95 °C/1,3 mbar gestrippt. Erhalten werden 77 g Rohprodukt, das laut $^{31}P$-NMR-Spektrum 91 % P als Tri-n-octylphosphanoxid-HCl-Addukt enthält.

Beispiel 13

In einer Standardapparatur (Beispiel 4) werden vorgelegt 0,75 Mol Chlorsulfonsäure und 0,75 Mol 2-Chlor-1,3,2-dioxaphospholan unter Kühlung bei 22-28 °C während 35 min zugetropft. Nach 45 min Nachreaktion wird bis 65 °C/30 mbar gestrippt. Es werden 109 g eines schwach gelben Rohproduktes erhalten, das laut $^{31}P$-NMR-Spektrum 75 % P als 2-Chlor-2-oxo-1,3,2-dioxaphospholan enthält.

**Anspruch**

1. Verfahren zur Oxidation von organischen Phosphorverbindungen der allgemeinen Formel (I)

$$R_{3-n}PX_n \qquad (I)$$

in welcher R entweder für geradlinige und/oder verzweigte Alkyl-, Cycloalkyl-, Aryl-, Alkylaryl- sowie Aralkylgruppen mit 1 bis 18 C-Atomen steht oder eine Gruppe —OR′ oder —SR′ darstellt, in der R′ einen Alkyl- oder Arylrest mit 1 bis 8 C-Atomen bedeutet, oder R eine Gruppe

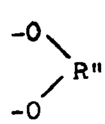

ist, in der R″ die Bedeutung eines Alkylrestes mit 2 bis 8 C-Atomen besitzt, X einem Halogen entspricht und n = 0, 1, 2 oder 3 ist, zu Verbindungen der allgemeinen Formel (II)

$$R_{3-n}P(O)X_n \qquad (II)$$

in der R, X und n die oben genannten Bedeutungen aufweisen, dadurch gekennzeichnet, daß man die genannten Phosphorverbindungen mit Chlorsulfonsäure als Oxidationsmittel im Molverhältnis 1 : 1 bis 1 : 1,1 bei Temperaturen zwischen − 30 und 150 °C in einer homogenen flüssigen Phase umsetzt.

**Claim**

Process for oxidizing organic phosphorus compounds of the general formula (I)

$$R_{3-n}PX_n \qquad (I)$$

in which R stands for linear and/or branched alkyl-, cycloalkyl-, aryl-, alkylaryl- as well as aralkyl groups having from 1 to 18 carbon atoms, or for a group —OR′ or —SR′, in which R′ stands for an alkyl radical or aryl radical having from 1 to 8 carbon atoms, or R stands for a group

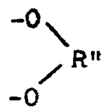

in which R″ stands for an alkyl radical having from 2 to 8 carbon atoms, X stands for a halogen, and n stands for 0, 1, 2 or 3, so as to obtain compounds of the following general formula (II)

$$R_{3-n}P(O)X_n \qquad (II)$$

in which R, X and n have the meanings given above, which comprises reacting the phosphorus compounds specified with chlorosulfonic acid as an oxidant in a molar ratio of 1 : 1 to 1 : 1.1 at temperatures between − 30 and 150 °C, in homogeneous liquid phase.

**Revendication**

Procédé pour l'oxydation de composés organiques de phosphore de formule générale (I)

$$R_{3-n}PX_n \qquad (I)$$

dans laquelle R représente des groupes alkyles linéaires et/ou ramifiés, cycloalkyles, aryles, alkylaryles et aralkyles en $C_1$-$C_{18}$, ou représente un groupe —OR′ ou —SR′, dans lequel R′ représente un radical aryle ou alkyle en $C_1$-$C_8$, ou R représente un groupe

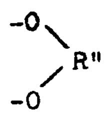

dans lequel R″ représente un radical alkyle en $C_2$-$C_8$, X représente un halogène et n est égal à 0, 1, 2 ou 3, pour obtenir des composés de formule générale (II)

$$R_{3-n}P(O)X_n \qquad (II)$$

dans laquelle R, X et n ont les significations mentionnées ci-dessus, caractérisé en ce que l'on fait réagir les composés de phosphore mentionnés avec l'acide chlorosulfonique comme oxydant dans un rapport molaire de 1 : 1 à 1 : 1,1 à des températures entre − 30 °C et 150 °C en phase liquide homogène.